(19) Europäisches Patentamt
European Patent Office
Office européen des brevets

(11) EP 2 693 397 B1

(12) **EUROPEAN PATENT SPECIFICATION**

(45) Date of publication and mention
of the grant of the patent:
**06.09.2017 Bulletin 2017/36**

(51) Int Cl.:
*G06T 7/33* (2017.01)     *G06T 5/50* (2006.01)
*G06T 5/00* (2006.01)

(21) Application number: **12461534.5**

(22) Date of filing: **30.07.2012**

(54) **Method and apparatus for noise reduction in an imaging system**

Verfahren und Vorrichtung zur Rauschreduzierung in einem Bildgebungssystem

Procédé et appareil de réduction du bruit dans un système d'imagerie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2014 Bulletin 2014/06**

(73) Proprietor: **Canon Kabushiki Kaisha
Tokyo 146-8501 (JP)**

(72) Inventors:
• **Chalecki, Arkadiusz
42-400 Zawiercie (PL)**
• **Pintal, Lukasz
59-610 Wlen (PL)**
• **Piotrowski, Krzysztof
42-400 Zawiercie (PL)**

(74) Representative: **Hitching, Peter Matthew et al
Canon Europe Ltd
European Patent Department
3 The Square
Stockley Park
Uxbridge Middlesex UB11 1ET (GB)**

(56) References cited:
• **FLORENCE ROSSANT ET AL: "Enhancement of Optical Coherence Tomography Images of the Retina by Normalization and Fusion", RADIOENGINEERING, vol. 17, no. 4, 1 December 2008 (2008-12-01), pages 86-90, XP055044994,**
• **MACIEJ SZKULMOWSKI ET AL: "Efficient reduction of speckle noise in Optical Coherence Tomography", OPTICS EXPRESS, vol. 20, no. 2, 6 January 2012 (2012-01-06), page 1337, XP055044858, DOI: 10.1364/OE.20.001337**
• **DAVID ALONSO-CANEIRO ET AL: "Speckle reduction in optical coherence tomography imaging by affine-motion image registration", JOURNAL OF BIOMEDICAL OPTICS, vol. 16, no. 11, November 2011 (2011-11), pages 116027-1-116027-5, XP055044973, ISSN: 1083-3668, DOI: 10.1117/1.3652713**
• **B SANDER: "Enhanced optical coherence tomography imaging by multiple scan averaging", BRITISH JOURNAL OF OPHTHALMOLOGY, vol. 89, no. 2, 1 February 2005 (2005-02-01), pages 207-212, XP055044967, ISSN: 0007-1161, DOI: 10.1136/bjo.2004.045989**

**EP 2 693 397 B1**

**Description**

The present invention relates to a method of noise and interference reduction in an imaging system. More particularly the present invention relates to image integration, for example, in optical coherence tomography (OCT) imaging systems.

Conventional OCT devices comprise means for scanning a light beam transversally across a target object, i.e. in one or two directions perpendicular to the direction of propagation of the light beam. A two or three-dimensional image of the internal sample structure can be generated from the resulting signal obtained from the scans. A one-dimensional signal recorded along the direction of the light beam is usually called "A scan". A number of A-scans composed along a line substantially perpendicular to the light beam form a two-dimensional cross-section of the structure under test which is typically called a "B-scan".

Typically the coordinate system used when referring to OCT images defines the $z$ axis as substantially parallel to the light beam used to perform the OCT scan. The axes denoted as $x$ and $y$ are perpendicular to the $z$ axis and to each other. A-scans are taken along the $z$ axis while B-scans can be located in any plane including the $z$ axis. In particular, B-scans can be located in the "$xz$" and "$yz$" planes.

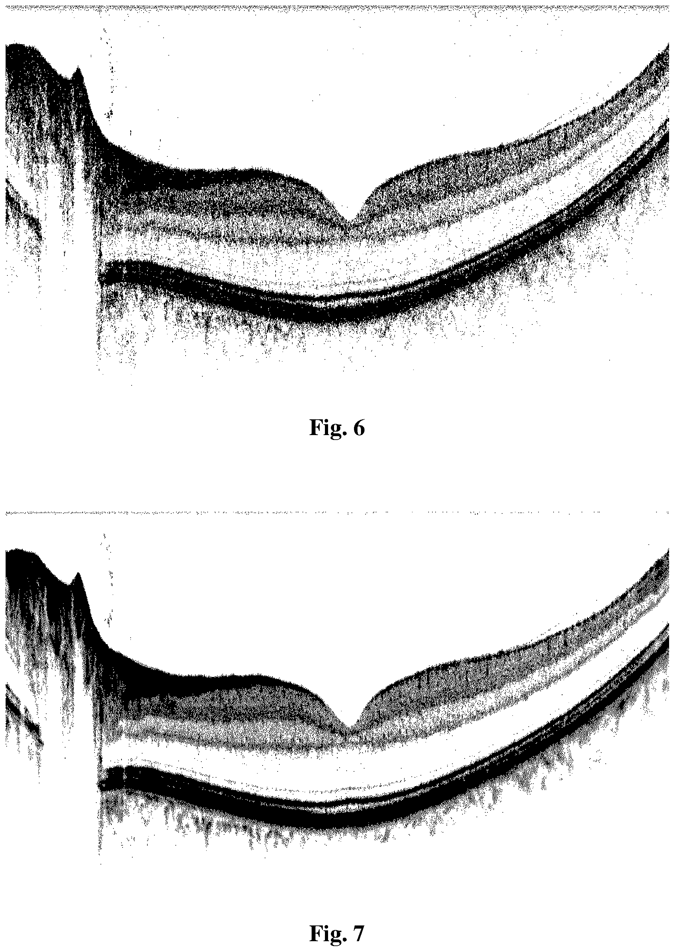

Noise and other interference that can occur in OCT imaging systems are detrimental to the clarity of any resulting B-scans. An example of a distorted tomogram is shown in Fig. 6. There are two kind of noise which can be observed on images. The first type of noise is related to the measurement sensitivity, the noise floor of the imaging camera and the exposure time. It can be visible as small bright or dark dots on a tomogram, even in areas representing empty space. This first type of noise is often referred to as additive noise. The second kind of noise is associated with the optical characteristics of the light source which is used in the image capturing device and, in particular, relates to the optical resolution of the light source. It manifests itself in images as structures of granular shape called speckles larger than the dots indicative of the first type of noise. This second type of noise is often referred to as multiplicative noise.

There are a number of methods of noise reduction known in the art, for example, the method disclosed in Szkulmowski et al., Optics Express, vol. 20, no. 2, p.1337 (2012). A typical method is the so called multi-exposition method which consists in taking a set of images of the same object and integrating them so as to obtain an image of better quality. This method is well known in other fields of imaging, especially in astrophotography.

This method can also be applied in OCT imaging, where a series of registered images i.e. B-scans, can be integrated by an image processing method. Such methods are used in some commercially available OCT devices, e.g. Spectralis, Heidelberg.

However, a number of problems exist related to such known methods. For example, during the capturing process of a living object in particular human eye the object may not remain stationary. This can cause the introduction of motion artifacts to any captured series of images intended for integration. Movements which occur along the tomogram plane can be compensated by translation and/or rotation of the whole B-scan prior to integration. However, there are other factors which can limit the accuracy of integration of the images, for example where:

- the quality of particular images is too low;
- there is significant movement of a the object, in particular retina/eye, perpendicular to the scanning direction; or
- additional artifacts are present, for example, vignetting and other types of distortion like signal aliasing, signal reflections, etc.

State of the art solutions to these problems are typically based solely on a correlation between tomograms using a pixel matching approach. A significant disadvantage of known methods based on image correlation using the pixel matching approach is a high susceptibility to artifacts and a higher level of noise. Moreover the huge amount of data to be processed in pixel matching methods increases the time required to process the images. It is an object of a present invention, therefore, to provide a method for tomogram integration which is less sensitive to image imperfections and provides accurate, fast and robust image integration. An example of such a method is disclosed in Rossant et al., "Enhancement of Optical Coherence Tomography Images of the Retina by Normalization and Fusion", RADIOENGINEERING, vol. 17, no. 4, p. 86-90 (2008).

A proposed solution to at least the problem stated is presented herein which suggests using morphological data derived from the content of B-scans and some initial assumptions or general knowledge of the structure of imagined object. That derived morphological data is less dependent on image quality than pure intensity information.

In a first aspect the invention provides a method for integrating images according to claim 1. Thus, the integration performed may be of two or more of the corrected images only and not include an image relating to the reference layer data or may be of an image relating the reference layer data and at least one of the corrected images. The integration advantageously results in a single image of the target region with improved noise characteristics compared to the originally captured images.

The method according to the first aspect of the invention solves a problem related to image integration. The method is more effective than those known in the art, because it is less susceptible to artifacts occurring in the images and is particularly suited to eye tomograms. As a consequence, it can be successfully applied to obtain OCT scans with high resolution and low noise.

Preferably reference layer data is obtained by selecting a reference image from captured images.

Preferably the invention capturing images is realized by means of a tomography system applied to the eye and the captured images are B-scans.

Advantageously selecting one of the captured images as a reference image comprises following steps of:

correlating morphological data of each possible pair of images to determine respective correlation values; and

utilizing the determined correlation values to determine the selection of the reference image.

Preferably comparing the layer data relating to the image with the reference layer data further comprises determining a correlation value. A corrected image is generated only if the respective correlation value meets a predetermined threshold criterion.

Preferably the method, further comprises analyzing the morphology of the captured images to generate the layer data.

Advantageously the method further comprises analyzing the layer data to find layer data that is unusable according to a predetermined criterion.

Preferably images determined as having unusable layer data are excluded from integration.

Preferably each relative geometric transformation includes relative displacement measured as a triple representing horizontal and vertical translation and rotation $(\Delta x_{i,j}, \Delta z_{i,j}, \alpha_{i,j})$, while the transform operation comprises applying a geometric transformation based on said triple but with opposite sign.

Advantageously the geometric transformation further includes scaling parameters.

Advantageously prior to selection of the reference image a cross-correlation procedure is applied to the layer data of captured images and selection of reference image is based on the result of this correlation.

Preferably reference image is the one that has maximum number of correlation values with other images that exceeds a predetermined *limit* value.

Advantageously images are assigned consecutive indexes during capture and where in the case that more than one image has the maximum number of correlation values exceeding the predetermined *limit* the image selected is the one that has an index closest to the half of the total number of captured images.

Preferably integrating includes any or all of taking a mean, median or weighted average of the corrected images.

In the second aspect, invention provides an optical coherence tomography (OCT) imaging system comprising a processing unit, wherein processing unit is adapted to perform the method presented above.

Advantageously the system further comprises image capturing means for capturing a series of images to be integrated. In the third aspect, invention provides a machine readable medium carrying one or more machine readable instructions that upon execution by a processor cause a machine to perform a method presented above.

Embodiments of the invention will now be described with reference to the accompanying drawings, in which:

Fig. 1 is a flow-chart illustrating the main steps of a method for tomogram integration according to an embodiment of the present invention;

Fig. 2 is a flow-chart illustrating steps performed in executing step 1.1 in calculating the best correlation between each pair of tomograms;

Fig. 3 is a flow-chart illustrating steps performed in executing step 1.1.5 in finding the best correlation between tomograms;

Fig. 4 is a flow-chart illustrating steps performed in executing step 1.4 in calculating the best correlation between reference tomogram and all others in the series;

Fig. 5 is a flow-chart of illustrating the steps of a method for tomogram integration, according to embodiments of the invention, with an additional step of image selection;

Fig. 6 is an illustration showing a tomogram of the human eye which suffers from image noise;

Fig. 7 is an illustration of a tomogram of human eye which has been processed to reduce noise by performing integration according to the invention;

Fig. 8 illustrates a pair of eye tomograms with detected layer boundaries, where each tomogram has been subject to a morphology analysis;

Fig. 9 illustrates the displacement between detected layers by overlaying the pair of tomograms shown in Fig. 8;

Fig. 10 illustrates a correction of dislocation of one of the tomograms overlaid in Fig. 9 by translation and rotation; and

Fig. 11 shows an area of calculation of correlation between two layer boundaries.

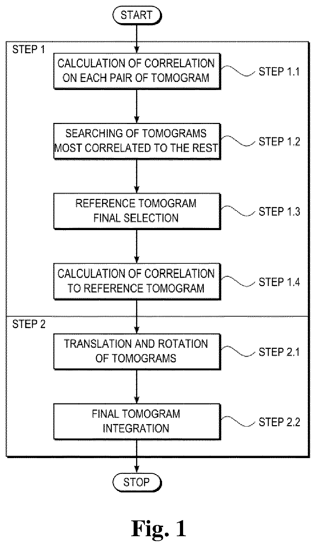

A preferred embodiment of the invention relates to an OCT system dedicated to imaging the human eye. For OCT scans of the posterior or anterior part of eye, the most significant features are layers which are anatomical structures inside the eye. A flow chart of a method for tomogram integration according to a first embodiment of the invention is presented in Fig. 1.

It is assumed that before applying the method:

- a series of B-scans of the human eye have been captured; and

- an initial morphology analysis of the scans has already been performed either automatically using methods known in the art or manually by a person skilled in morphology analysis. The morphology analysis determines morphological data which defines identified morphological features in the subject tomogram. The morphological data preferably takes the form of matrices containing z positions of particular layers. Thus, every B-scan is accompanied by a matrix of corresponding dimensions containing morphological information. This matrix is referred to as "layer". This morphological data is provided as additional input data for the tomogram integration method.

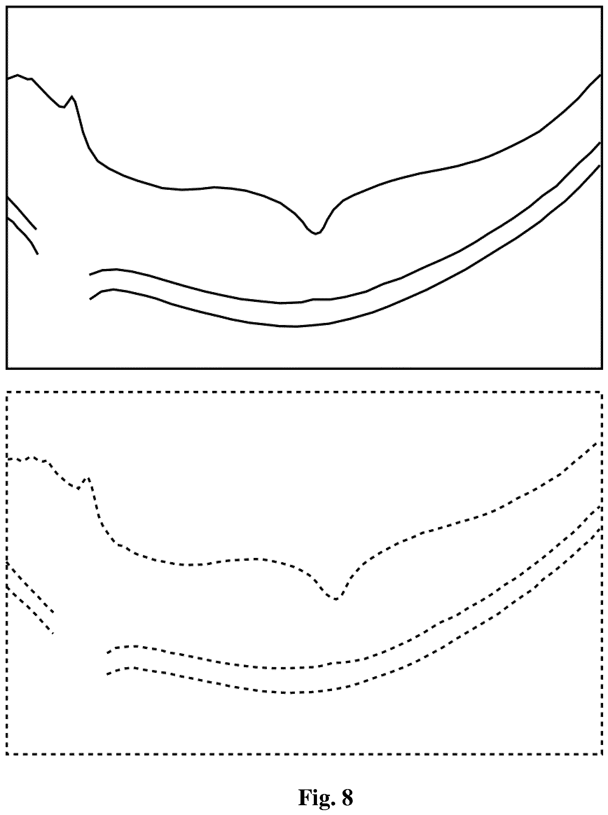

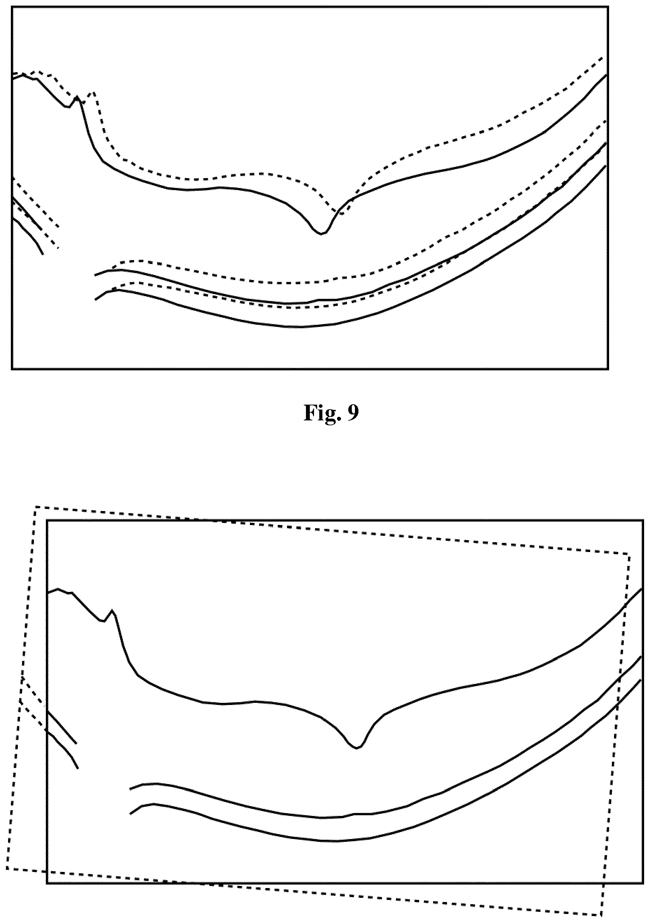

The process begins with STEP 1.1 in which morphological data, is used to find a best correlation (translation and/or rotation) between each pair of B-scans. Morphological data in this embodiment is simply layer data corresponding to captured B-scans. Correlated layers are shown separately in Fig. 8 and overlaid in Fig. 9. As is clear from Fig.9, there is a displacement between the layer boundaries identified in the first tomogram (shown with a solid line) and those from the second tomogram (shown with the dotted line).

S denotes a number of tomograms taken during an topographic capture process which constitutes the set of tomograms to be integrated. Every tomogram in the set is assigned its own unique index from range $\langle 0, |S| - 1 \rangle$ based on order of the acquisition operation.

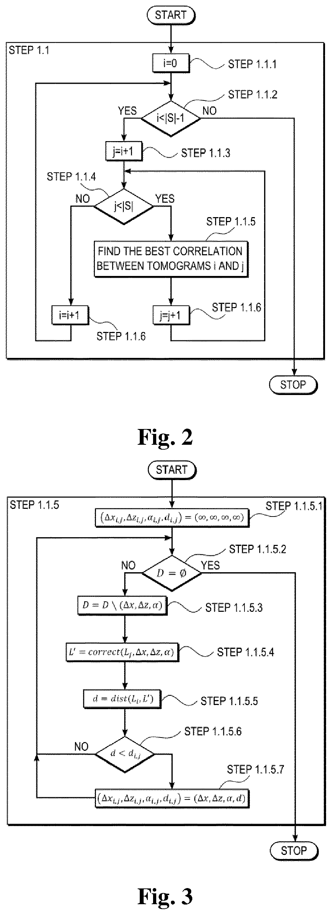

Fig. 2 shows the steps performed at step 1.1 of the algorithm of figure 1 where $i$ and $j$ refer to indexes of B-scans which are to be processed. For each pair of $i$ - $th$ and $j$ - $th$ tomograms the following parameters are calculated:

- Relative geometric transformation, precise relative displacement between B-scans measured as a set of triples $(\Delta x_{i,j}, \Delta z_{i,j}, \alpha_{i,j})$ which mean horizontal translation ($\Delta x_{i,j}$), vertical translation ($\Delta z_{i,j}$) and rotation ($\alpha_{i,j}$) values in the best correlation between the subject $i$-$th$ and $j$-$th$ tomograms;
- Best match found between two B-scans, measured as maximal correlation value ($d_{i,j}$).

There is no need to check all combinations of tomogram pairs because displacement and correlation are mutually symmetric between the same two elements i.e.:

$$\Delta x_{j,i} = -\Delta x_{i,j}, \quad \Delta z_{j,i} = -\Delta z_{i,j}, \quad \alpha_{j,i} = -\alpha_{i,j} \text{ and } d_{j,i} = d_{i,j}$$

$$\Delta x_{i,i} = 0, \quad \Delta z_{i,i} = 0, \quad \alpha_{i,i} = 0 \text{ and } d_{i,i} = 0$$

Firstly, in STEP 1.1.1 index $i$ is initialized to 0. Then a first loop begins. A first loop continuation condition is evaluated in STEP 1.1.2 for index $i$. If the loop continuation condition $i<|S|-1$ is not met then the first loop terminates at STOP. Otherwise, the loop continues and index $j$ is set to a value greater by 1 in STEP 1.1.3. Then a second loop begins and a second loop continuation condition is evaluated at STEP 1.1.4. If the second loop continuation condition $j < |S|$ is not met then index $i$ is incremented and the second loop terminates at STEP 1.1.2. Otherwise, STEP 1.1.5 is performed in which values $(\Delta x_{i,j}, \Delta z_{i,j}, \alpha_{i,j}, d_{i,j})$ are calculated as a measure of the correlation between tomograms $i$ and $j$. Finally, in STEP 1.1.6 index $j$ is incremented and STEP 1.1.4 is performed again.

A flow chart showing the steps of finding the best correlation as per step 1.1.5 is shown in Fig. 3. For each triple $(\Delta x, \Delta z, \alpha) \in D$, where $D$ is the set of possible transformations. The transformations are typically translations and rotations. In this embodiment $D$ is defined as follows: $\Delta x \in \langle -50,50 \rangle$, $\Delta z \in \langle -50,50 \rangle$ and $\alpha \in \langle -10,10 \rangle$. In step 1.1.5.1, values to be determined by the subroutine $(\Delta x_{i,j}, \Delta z_{i,j}, \alpha_{i,j}, d_{i,j})$ are initialized to infinity. Then a first loop begins. In STEP 1.1.5.2 a first loop termination condition is evaluated. If the first loop termination condition of $D$ being empty is met, then the loop and subroutine ends at STOP. Then, in STEP 1.1.5.3, a triple $(\Delta x, \Delta y, \alpha)$ is selected from the set $D$ and removed from the set $D$. Layer boundaries $L_j$ of $j$ - $th$ tomogram are corrected - rotated and translated in step 1.1.5.4 to generate corrected layer boundaries $L'$. A correlation between layers of $i$ - $th$ tomogram ($L_i$) and modified layers of the $j$ - $th$ tomogram ($L'$) are calculated in STEP 1.1.5.5. If the condition that the computed value $d$ is lower than the current value ($d_{j,i}$), evaluated in STEP 1.1.5.6, is met then the resulting values of translation, rotation and correlation ($\Delta x_{i,j}, \Delta z_{i,j}, \alpha_{i,j}, d_{i,j}$)

are replaced by the newly calculated values ($\Delta$x,$\Delta$z,$\alpha$,d) in STEP 1.1.5.7.

Calculation of a correlation value between layers from tomograms *A* and *B* is performed using following equation:

$$dist(A,B) = \frac{\sum_{k=1}^{count} layerDist\,(A_k, B_k)}{count}$$

where *count* means number of layer boundaries which are taken into consideration (at least one) in calculation of correlation and *layerDist* is the correlation value calculated using *k - th* layer's boundary detected on tomograms defined as follows:

$$layerDist(A_k, B_k) = \frac{\sum_{x=left}^{right} \sqrt{|A_k(x) - B_k(x)|}}{right - left + 1}$$

where *left* and *right* are the first and the last A-scan used to calculate the result, $A_k(x)$ and $B_k(x)$ mean vertical position of *k - th* layer's boundary on tomogram *A* and *B* respectevily. Averaging applied to calculate *dist* and *layerDist* may be advantageously replaced with median or weighted average or any other measure of the fit between curves like for instance maximum.

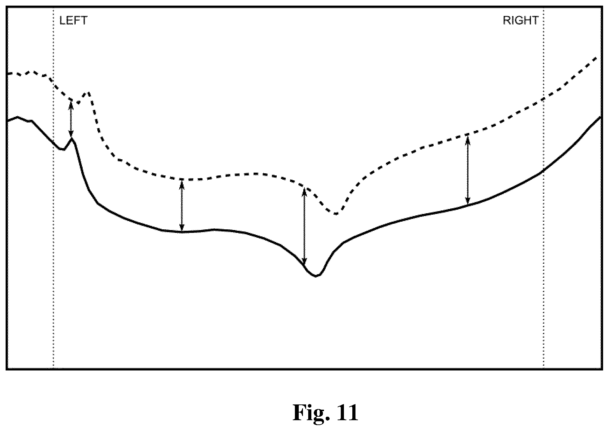

An example of calculating the correlation value between two layer's boundaries is presented in Fig. 11. The solid line represents the $A_k$ boundary and the dashed one the $B_k$ boundary. The vertical dotted lines indicate the *left* and *right* limits of calculation. The vertical lines with arrows represent the difference between the position of layers for a particular A-scan, i.e. $|A_k(x) - B_k(x)|$.

It should be stressed that although in the present embodiment every scan is taken into account, A-scans taken into account may also be selected according to a predetermined pattern.

In the STEP 1.2 values of correlation between each tomogram pair are used for counting the number of acceptable matches between them according to the equation:

$$acceptance(A, B) = dist(A, B) \le limit$$

In this embodiment the *limit* parameter is set as being equal to the value 2. As will be appreciated, however, other values are possible. In embodiments, the *limit* parameter is preferably calibrated or optimized either manually or automatically according the imaging application to which the process is being applied. Images which have the highest number of approved correlations compared among the set are determined as candidates for being a reference tomogram.

In the STEP 1.3 a reference tomogram is selected to be a source of reference morphological data. If there is the only one candidate for the reference tomogram from STEP 1.2 that candidate is selected as the reference tomogram. Otherwise the selection is made of the tomogram from among the candidate reference tomograms which was taken nearest the middle of the sequence of captured images.

The reference morphological data originating from the selected reference tomogram is used for two purposes. One is to define a common coordinate system for the integration process. The other is to calculate the dislocation of B-scans with respect to the reference morphological data and preferably determine which of them can be integrated. This operation is performed in step 1.4.

In this embodiment, reference morphological data are obtained simply by selection of one reference tomogram and extracting morphological data from it. The selection of the reference tomogram is based on the above described algorithm. However, different selection criteria may be used that utilizes the correlation data to find the most suitable candidate. For example, a reference image can be obtained by averaging (calculating a mean or median) of several sets of morphological data. In one embodiment, the reference image can be selected from the middle of the sequence of captured tomograms and morphological data based on that image used.

Alternatively, a user may manually select which of the captured set of tomographs is to be used as a reference. It is also possible to use external morphological data obtained in a different measurement session or with different measurement equipment or even taken from available model (e.g. a computational model) of the object under test.

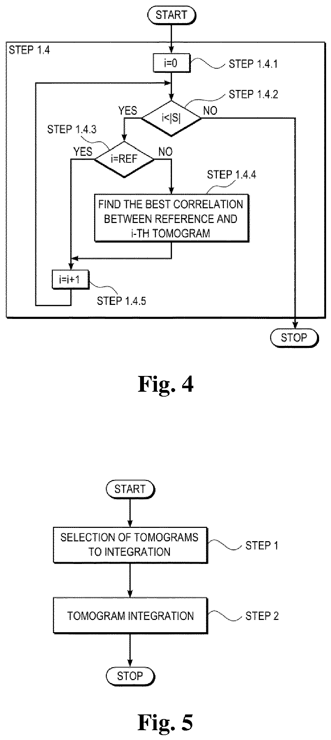

In Fig. 4 there is shown a flow-chart showing the steps performed in step 1.4 in comparing reference tomogram and the other tomograms. In this embodiment, the comparison is aimed at finding shift ($\Delta x_{i,j}$, $\Delta y_{i,j}$) and rotation ($\alpha_{i,j}$) values that guarantee a best correlation ($d_{i,j}$) between reference tomogram and the other tomograms. In more sophisticated embodiments, additional best scaling (shrinking/expansion) parameters may be computed during the comparison.

STEP 1.4 is very similar to step 1.1 and the same parameters are calculated - horizontal translation ($\Delta x_{i,j}$), vertical translation ($\Delta z_{i,j}$), and rotation ($\alpha_{i,j}$) values of the best correlation between the subject and reference tomograms and the best match found between two B-scans, measured as a maximal correlation value ($d_{i,j}$).

After the STEP 1.4 is initiated, index $i$ is set to 0 in STEP 1.4.1. Afterwards a loop begins. In step 1.4.2 loop duration condition is evaluated. If loop duration condition $i < |S|$ is not met then STEP 1.4 terminates at STOP. Otherwise, condition $i = REF$ is evaluated. If it is not met then STEP 1.4.4 is executed.

In fact, the functionality in step 1.4.4 is the same as in step 1.1.5 - it is based on a calculation of *dist* and then *acceptance* from step 1.2 as described above, however, the *limit* parameter is different at this time and equal to 1 to denote a lower threshold for acceptance for integration.

Afterwards STEP 1.4.5 is executed in which index $i$ incremented. If condition evaluated in STEP 1.4.3 is met the STEP 1.4.4 is not executed and flow goes directly to STEP 1.4.5. Next condition of STEP 1.4.2 is again evaluated.

After computation of dislocation of tomograms these which were accepted for integration are rotated and translated according calculated parameters (step 2.1). Finally corrected B-scans are integrated with the representative tomogram by averaging values of brightness of corresponding pixels of B-scan series.

The effect of the method can be observed in Fig. 6 and 7. Fig. 6 presents a tomogram that suffers from noise, while Fig. 7 presents tomogram of the same object obtained after performing integration according to the method described herein.

Execution of the method can be significantly speed-up if *limit* parameter has the same value in steps 1.1.5 and 1.4.1. Further speed up may be obtained if in STEP 1.4 correlations already counted in 1.1 are used. However, in some cases it may be preferable to use different possible transformation sets *D* in step 1.4 than in step 1.1.5.

Fig. 8 shows an example of two tomograms of a retina with some layer boundaries. One of B-scans is drawn in dashed line and in this example is affected by the eye movement. Geometric distortion is apparent between the tomograms and is more visible after overlaying one on the other as shown in Fig. 9. This geometric distortion can be corrected by suitable translation and/or rotation demonstrated in Fig. 10 as well as rescaling of a B-scan i.e. shrinking/expanding. The latter can be used to correct any kind of scanning distortions introduced by the imaging system, such as optical aberrations, nonlinearity of scanning devices (e.g. non-linear movement of a mirror deflecting a beam to be scanned over the object) as well as distortions introduced by a moving object during scanning.

It should be noted that determination of the parameters relating to the transformation and correlation do not need to rely on the correlation-based based mathematical methods described in relation to the above embodiments. One may use any mathematical method from among those known to those in the art that is suitable to find a best match between two sets of morphological data. For example, a Scale Invariant Feature Transform (SIFT) algorithm or artificial neural networks could be also applied to determine some or all of the parameters.

In the above described embodiments a different 'limit' value is used in Steps 1.1.5 and 1.4.1. However, an increase in computational efficiency can be achieved if the value used is the same for both. Thus, allowing this step to only be performed once and the result used for both selection of the reference and determining whether the image should be integrated.

Further, in embodiments described above the determination of the best correlation in steps 1.1.5 and 1.4.1 is based on a 'brute-force' search algorithm. However, other optimization procedures for finding the best correlation could be applied, for example, a Hook-Jeeves optimization.

In the above embodiments, the integration is based on layer detection only. However, in other embodiments the layer detection could be mixed with a pixel matching method. For example, the above described method could be used to find an approximate correlation between features in the images and the pixel based data could be used to perform a fine tuning of the approximate correlation.

It will be appreciated that methods embodying the present invention may be computer-implemented methods. Thus, the In the above embodiments, the integration is based on layer detection only. However, in other embodiments the layer detection could be mixed with a pixel matching method. For example, the above described method could be used to find an approximate correlation between features in the images and the pixel based data could be used to perform a fine tuning of the approximate correlation.

It will be appreciated that methods esmbodying the present invention may be computer-implemented methods. Thus, the present invention extends to a program which, when executed by a computer or processor, causes the computer or processor to carry out any of the methods described hereinbefore.

Such a program may be provided by itself or may be carried in, by or on a carrier medium. The carrier medium may be a storage medium or recording medium, in particular a computer-readable storage medium. Examples include a hard disk drive, DVD, or memory device.

The carrier medium may also be a transmission medium such as a signal. Thus, a program embodying the present invention may be distributed, downloaded or uploaded in the form of a signal through a network including the Internet.

The program may be non-transitory.

**EP 2 693 397 B1**

**Claims**

1. A method for integrating images relating to a plurality of captured optical coherence tomography, OCT, images of a target region of an object, the method comprising:

   - obtaining reference layer data relating to boundaries of a layer in one or more of the captured images;
   - for each of one or more of the images to be integrated:

     (i) comparing layer data relating to boundaries of a layer in the image with the reference layer data to determine a relative geometric transformation of the image with respect to the geometry of the reference layer data;
     (ii) generating a corrected image by performing on the image a transform that relates to the determined relative geometric transformation; and

   - integrating two or more images from the one or more generated corrected images and any image related to the reference layer data.

2. A method according to claim 1, **characterized in that** reference layer data is obtained by selecting a reference image from captured images.

3. A method according to claim 1 or 2 wherein capturing images is realized by means of a tomography system applied to the eye and the captured images are B-scans.

4. A method according to the claim 2, wherein selecting one of the captured images as a reference image comprises:

   correlating layer data of each possible pair of images to determine respective correlation values; and
   utilizing the determined correlation values to determine the selection of the reference image.

5. A method according to any preceding claim, wherein comparing the layer data relating to the image with the reference layer data further comprises determining a correlation value; and
   a corrected image is generated only if the respective correlation value meets a predetermined threshold criterion.

6. A method according to any preceding claim, further comprising analyzing the morphology of the captured images to generate the layer data.

7. A method according to claim 6, further comprising analyzing the layer data to find layer data that is unusable according to a predetermined criterion.

8. A method according to claim 7, wherein images which are determined as having unusable layer data are excluded from integration.

9. A method according to any of the preceding claims, wherein each relative geometric transformation includes relative displacement measured as a triple representing horizontal and vertical translation and rotation ($\Delta x_{i,j}, \Delta z_{i,j}, \alpha_{i,j}$), while the transform operation comprises applying a geometric transformation based on said triple but with opposite sign.

10. A method according to the claim 9, wherein the geometric transformation further includes scaling parameters.

11. A method according to claim 2, wherein prior to selection of the reference image a cross-correlation procedure is applied to the layer data of captured images and selection of reference image is based on the result of this correlation.

12. A method according to claim 11, wherein reference image is the one that has maximum number of correlation values with other images that exceeds a predetermined *limit* value.

13. A method according to claim 12, wherein images are assigned consecutive indexes during capture and where in the case that more than one image has the maximum number of correlation values exceeding the predetermined *limit* the image selected is the one that has an index closest to the half of the total number of captured images.

14. A method according to any of the preceding claims, wherein integrating includes any or all of taking a mean, median or weighted average of the corrected images.

15. An optical coherence tomography, OCT, imaging system comprising a processing unit, wherein processing unit is adapted to perform a method according to any of the claim 1 to 14.

16. An imaging system according to the claim 15 further comprising image capturing means for capturing a series of images to be integrated.

17. A machine readable medium carrying one or more machine readable instructions that upon execution by a processor cause a machine to perform a method according to any one of claims 1 to 14.


**Patentansprüche**

1. Verfahren zum Integrieren von Bildern bezüglich mehrerer aufgenommener optische-Kohärenz-Tomographie-Bilder (OCT) eines Zielgebiets eines Objekts, wobei das Verfahren umfasst:

   - Erhalten von Referenzschichtdaten bezüglich Grenzen einer Schicht in einem oder mehreren der aufgenommenen Bilder;
   - für jedes von einem oder mehreren zu integrierenden Bilder:

      (i) Vergleichen von Schichtdaten bezüglich Grenzen einer Schicht in dem Bild mit den Referenzschichtdaten zum Bestimmen einer relativen geometrischen Transformation des Bilds bezüglich der Geometrie der Referenzschichtdaten;
      (ii) Erzeugen eines korrigierten Bilds durch Durchführen einer Transformation am Bild, die sich auf die bestimmte relative geometrische Transformation bezieht; und

   - Integrieren zweier oder mehrerer Bilder von dem einen oder den mehreren erzeugten korrigierten Bilder und einem der auf die Referenzschichtdaten bezogenen Bilder.

2. Verfahren nach Anspruch 1, **gekennzeichnet dadurch, dass** Referenzschichtdaten durch Auswahl eines Referenzbilds aus aufgenommenen Bildern erhalten werden.

3. Verfahren nach Anspruch 1 oder 2, wobei die Bildaufnahme mittels einem Tomographiesystem realisiert wird, das am Auge angewandt wird und die aufgenommenen Bilder B-Scans sind.

4. Verfahren nach Anspruch 2, wobei die Auswahl eines der aufgenommenen Bilder als ein Referenzbild umfasst:

   Korrelieren von Schichtdaten jedes möglichen Bilderpaars, um jeweilige Korrelationswerte zu bestimmen; und Verwenden der bestimmten Korrelationswerte, um die Auswahl des Referenzbilds zu bestimmen.

5. Verfahren nach einem der vorangegangenen Ansprüche, wobei das Vergleichen der Schichtdaten bezüglich des Bilds mit den Referenzschichtdaten ferner das Bestimmen eines Korrelationswerts umfasst; und

   ein korrigiertes Bild nur erzeugt wird, falls der jeweilige Korrelationswert einem vorbestimmten Schwellenwertkriterium entspricht.

6. Verfahren nach einem der vorangegangenen Ansprüche, ferner umfassend das Analysieren der Morphologie der aufgenommenen Bilder, um die Schichtdaten zu erzeugen.

7. Verfahren nach Anspruch 6, ferner umfassend das Analysieren der Schichtdaten, um Schichtdaten, die gemäß einem vorbestimmten Kriterium unbrauchbar sind, zu finden.

8. Verfahren nach Anspruch 7, wobei Bilder, bei denen bestimmt wird, dass diese unbrauchbare Schichtdaten aufweisen, von der Integration ausgeschlossen werden.

9. Verfahren nach einem der vorangegangenen Ansprüche, wobei jede relative geometrische Transformation relative Verschiebung enthält, die als ein Dreifaches gemessen wird, das horizontale und vertikale Übersetzung und Rotation

$(\Delta x_{i,j}, \Delta z_{i,j}, \alpha_{i,j})$ darstellt, während der Transformationsvorgang Anwenden einer geometrischen Transformation umfasst, basierend auf dem Dreifachen, aber mit gegenteiligem Zeichen.

10. Verfahren nach Anspruch 9, wobei die geometrische Transformation ferner das Skalieren von Parametern enthält.

11. Verfahren nach Anspruch 2, wobei vor der Auswahl des Referenzbilds ein Kreuzkorrelationsverfahren an den Schichtdaten der aufgenommenen Bilder angewandt wird und die Auswahl des Referenzbilds auf dem Ergebnis dieser Korrelation basiert.

12. Verfahren nach Anspruch 11, wobei das Referenzbild dasjenige ist, das eine Maximalanzahl von Korrelationswerten mit anderen Bildern aufweist, welche einen vorbestimmten Grenzwert erreichen.

13. Verfahren nach Anspruch 12, wobei den Bildern konsekutive Indizes während der Aufnahme zugeordnet werden und in dem Fall, bei dem mehr als ein Bild die Maximalanzahl von Korrelationswerten aufweist, die die vorbestimmte Grenze überschreiten, das ausgewählte Bild dasjenige ist, das einen Index aufweist, der der Hälfte der Gesamtanzahl aufgenommener Bilder am nächsten ist.

14. Verfahren nach einem der vorangegangenen Ansprüche, wobei das Integrieren zumindest eines oder alle von Aufnehmen eines Mittel-, Median- oder gewichteten Durchschnitts der korrigierten Bilder enthält.

15. Optisches Kohärenztomographiebildsystem, umfassend eine Verarbeitungseinheit, wobei die Verarbeitungseinheit ausgebildet ist, ein Verfahren nach einem der Ansprüche 1 bis 14 durchzuführen.

16. Abbildungssystem nach Anspruch 15, ferner umfassend eine Bildaufnahmeeinrichtung zum Aufnehmen einer Serie von zu integrierenden Bildern.

17. Maschinenlesbares Medium, das eine oder mehrere maschinenlesbare Anweisungen trägt, die bei Ausführung durch einen Prozessor eine Maschine dazu veranlassen, ein Verfahren nach einem der Ansprüche 1 bis 14 durchzuführen.

## Revendications

1. Procédé destiné à intégrer des images liées à une pluralité d'images de tomographie à cohérence optique, OCT, capturées d'une région cible d'un objet, le procédé consistant à :

   - obtenir des données de couches de référence liées à des limites d'une couche dans une ou plusieurs des images capturées ;
   - pour chacune d'une ou plusieurs des images devant être intégrées :

      (i) comparer des données de couches liées à des limites d'une couche dans l'image aux données de couches de référence pour déterminer une transformation géométrique relative de l'image par rapport à la géométrie des données de couches de référence ;
      (ii) générer une image corrigée en effectuant sur l'image une transformation qui est liée à la transformation géométrique relative déterminée ; et

   - intégrer deux images ou plus parmi lesdites une ou plusieurs images corrigées générées et une image quelconque liée aux données de couches de référence.

2. Procédé selon la revendication 1, **caractérisé en ce que** des données de couches de référence sont obtenues en sélectionnant une image de référence parmi les images capturées.

3. Procédé selon la revendication 1 ou 2, dans lequel la capture des images est réalisée au moyen d'un système de tomographie appliqué à l'oeil et les images capturées sont des présentations B.

4. Procédé selon la revendication 2, dans lequel la sélection de l'une des images capturées en tant qu'image de référence consiste à :

corréler des données de couches de chaque paire d'images possible afin de déterminer des valeurs de corrélation respectives ; et
utiliser les valeurs de corrélation déterminées pour déterminer la sélection de l'image de référence.

5. Procédé selon l'une quelconque des revendications précédentes, dans lequel la comparaison des données de couches concernant l'image comportant les données de couches de référence consiste en outre à déterminer une valeur de corrélation ; et
une image corrigée n'est générée que si la valeur de corrélation respective satisfait à un critère de seuil.

6. Procédé selon l'une quelconque des revendications précédentes, consistant en outre à analyser la morphologie des images capturées pour générer les données de couches.

7. Procédé selon la revendication 6, consistant en outre à analyser des données de couches afin de trouver des données de couches inutilisables selon un critère prédéterminé.

8. Procédé selon la revendication 7, dans lequel les images dont il est déterminé qu'elles contiennent des données de couches inutilisables sont exclues de l'intégration.

9. Procédé selon l'une quelconque des revendications précédentes, dans lequel chaque transformation géométrique relative comprend un déplacement relatif mesuré sous la forme d'un triplet représentant des translations horizontale et verticale et une rotation ($\Delta x_{i,j}$, $\Delta z_{i,j}$, $\alpha_{i,j}$), alors que l'opération de transformation consiste à appliquer une transformation géométrique basée sur ledit triplet mais de signe opposé.

10. Procédé selon la revendication 9, dans lequel la transformation géométrique comporte en outre des paramètres d'échelle.

11. Procédé selon la revendication 2, dans lequel, avant la sélection de l'image de référence, un processus d'intercorrélation est appliqué aux données de couches des images capturées et la sélection de l'image de référence est basée sur le résultat de cette corrélation.

12. Procédé selon la revendication 11, dans lequel l'image de référence est une image dont le nombre maximum de valeurs de corrélation avec d'autres images dépasse une valeur limite prédéterminée.

13. Procédé selon la revendication 12, dans lequel des indices consécutifs sont affectés à des images pendant la capture et dans lequel, dans les cas où plusieurs images présentent le nombre maximum de valeurs de corrélation dépassant la limite prédéterminée, l'image sélectionnée est une image dont l'indice est le plus proche de la moitié du nombre total des images capturées.

14. Procédé selon l'une quelconque des revendications précédentes, dans lequel l'intégration consiste en l'une quelconque ou en la totalité des opérations de calcul d'une moyenne, d'une médiane ou d'une moyenne pondérée des images corrigées.

15. Système de formation d'image par tomographie à cohérence optique, OCT, comprenant une unité de traitement, dans lequel l'unité de traitement est apte à mettre en oeuvre un procédé selon l'une quelconque des revendications 1 à 14.

16. Système de formation d'image selon la revendication 15, comprenant en outre un moyen de capture d'image pour la capture d'une série d'images à intégrer.

17. Support lisible par machine portant une ou plusieurs instructions lisibles par machine qui, lors de leur exécution par un processeur, amènent une machine à mettre en oeuvre un procédé selon l'une quelconque des revendications 1 à 14.

START

STEP 1

CALCULATION OF CORRELATION
ON EACH PAIR OF TOMOGRAM — STEP 1.1

SEARCHING OF TOMOGRAMS
MOST CORRELATED TO THE REST — STEP 1.2

REFERENCE TOMOGRAM
FINAL SELECTION — STEP 1.3

CALCULATION OF CORRELATION
TO REFERENCE TOMOGRAM — STEP 1.4

STEP 2

TRANSLATION AND ROTATION
OF TOMOGRAMS — STEP 2.1

FINAL TOMOGRAM
INTEGRATION — STEP 2.2

STOP

**Fig. 1**

**Fig. 2**

**Fig. 3**

Fig. 4

Fig. 5

Fig. 6

Fig. 7

**Fig. 8**

**Fig. 9**

**Fig. 11**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SZKULMOWSKI et al.** *Optics Express,* 2012, vol. 20 (2), 1337

- **ROSSANT et al.** Enhancement of Optical Coherence Tomography Images of the Retina by Normalization and Fusion. *RADIOENGINEERING,* 2008, vol. 17 (4), 86-90